Europäisches Patentamt

European Patent Office

Office européen des brevets

(19)

(11) Veröffentlichungsnummer: **0 448 986 A1**

(12) # EUROPÄISCHE PATENTANMELDUNG

(21) Anmeldenummer: 91103154.0

(51) Int. Cl.5: **B65G 47/244**

(22) Anmeldetag: 02.03.91

(30) Priorität: 24.03.90 DE 4009517

(43) Veröffentlichungstag der Anmeldung:
02.10.91 Patentblatt 91/40

(84) Benannte Vertragsstaaten:
**BE DE FR GB NL**

(71) Anmelder: **KHS VERPACKUNGSTECHNIK**

GmbH
Eichendorffstrasse 9
W-4600 Dortmund 1(DE)

(72) Erfinder: **Bargel, Günter**
Sommerbergweg 4
W-4600 Dortmund 30(DE)

(54) **Vorrichtung zum Drehen von Gebinden.**

(57) Bei derartigen Vorrichtungen soll die Drehung eines Gebindes bei schonender Behandlung unter Ausnutzung der sich bei einem bestimmten Bahnverlauf ergebenden automatischen Lageveränderung durchgeführt werden.

Als Lösung wird bei einer Vorrichtung zum Drehen von Gebinden vorgeschlagen, daß die Gebinde (3) bei verbleibender Auflage auf den Förderbändern (5, 6) unter Beibehaltung ihrer Einlauflage in einer um 90° verlaufenden Förderstrecke (4) aus einer quergerichteten Zulaufposition in eine längsgerichtete Ablaufposition und/oder umgekehrt verfahrbar sind.

Die Vorrichtung findet vorzugsweise Verwendung in der Transport- und Verpackungsindustrie.

EP 0 448 986 A1

Die Erfindung bezieht sich auf eine Vorrichtung zum Drehen von Gebinden auf einer Förderstrecke, bei welcher die Gebinde mindestens an zwei Unterstützungspunkten von einem Förderer getragen und in ihrer Position um vorzugsweise 90° gedreht und weitergeführt werden, bestehend aus mindestens zwei parallel zueinander verlaufenden Förderbändern mit zugeordneten Antrieben.

Aus der DE-AS 1 436 856 ist eine Vorrichtung zum Überführen horizontal transportierter flacher Werkstücke in eine um 90° gedrehte Lage bekannt. Hierbei werden die Werkstücke zwischen ein Förderelementenpaar eingeführt, wobei parallel zu diesem arbeitende weitere Förderorgane vorgesehen sind, die mit einer anderen Umfangsgeschwindigkeit arbeiten, als das erstgenannte Paar Förderelemente, wobei die Richtung der Relativgeschwindigkeit der gewünschten Schwenkrichtung der Werkstücke entspricht und wobei das erstgenannte Paar Förderelemente als in einer vertikalen Ebene übereinander angeordnetes Förderkettenpaar ausgebildet ist, daß mit paarweise zusammenwirkenden, um vertikale Achsen frei drehbaren Klemmstücken zum Erfassen und Halten der Werkstücke an jeweils einer Stelle ausgerüstet ist. Hierbei ist ein weiteres Förderorgan, daß mit Relativgeschwindigkeit gegenüber jenen vorgenannten ersten Förderkettenpaar angetrieben ist, vorgesehen. Demzufolge sind bei dieser bekannten Vorrichtung mehr nebeneinander verlaufende Förderbänder mit unterschiedlichen Geschwindigkeiten angeordnet. Das Werkstück selbst wird von oben her an einem Eckpunkt gehalten und durch die Relativgeschwindigkeit der einzelnen Förderbänder durch diese gedreht. Dabei entsteht entsprechend der sich jeweils abstufenden und steigenden Geschwindigkeit eine erhebliche Beanspruchung des Werkstückbodens durch die schleifende oder auch rutschende Bewegung relativ zu den einzelnen Förderbändern. Der Förderer selbst verläuft in geradliniger Spur. Die Drehbewegung kann demzufolge nur unter Überwindung der Bodenreibung eines jeden Werkstückes durchgeführt werden. Verständlicherweise sind hierbei nicht nur Nachteile für das Werkstück, sondern auch entsprechend hohe Antriebsleistungen erforderlich, die je nach Schwere des zu drehenden Werkstücks von dem dann vorhandenen Reibungsbeiwert abhängig sind.

Aus der DE-OS 26 52 544 ist ein weiterer Förderer bekannt geworden, der diese Nachteile nicht aufweist und die Werkstücke und/oder Gebinde von einem ersten Förderer auf einen zweiten Förderer transportiert, wobei diese Förderer in einem Winkel von 90° zueinander stehen. Als Verbindungsglied beider Förderer dient eine Drehscheibe, die mit Übernahmeflächen versehen ist, mit denen das Gebinde während des Umlaufes gedreht und auf diese Weise quer zur Einlaufrichtung abtransportiert werden kann. Diese Vorrichtung arbeitet erheblich schonender als die eingangs genannte Fördervorrichtung. Allerdings müssen bei dieser bekannten Vorrichtung mehrere Stationen durchlaufen werden, wodurch sich der Aufwand einer solchen Vorrichtung erheblich erhöht. Hinzu kommt, daß die Drehscheibe, die die einzelnen Drehvorrichtungen dreht, ein entsprechend großes Raumangebot entsprechend dem Drehkreis in Anspruch nimmt und insofern insbesondere bei bestimmten Projekten in der Förderindustrie nicht einsetzbar ist.

Ausgehend von dem aufgezeigten Stand der Technik liegt der Erfindung die Aufgabe zugrunde, die Drehung eines Gebindes bei schonender Behandlung und Ausnutzung der sich bei einem bestimmten Bahnverlauf ergebenden automatischen Lageveränderung durchzuführen, ohne daß besonders aufwendige zusätzliche Vorrichtungen erforderlich sind.

Diese Aufgabe wird bei einer Vorrichtung der eingangs genannten Art gemäß Oberbegriff dadurch gelöst, daß die Gebinde bei verbleibender Auflage auf den Förderbändern unter Beibehaltung ihrer Einlauflage in einer um 90° verlaufenden Förderstrecke aus einer quergerichteten Zulaufposition in eine längsgerichtete Ablaufposition und/oder umgekehrt verfahrbar sind.

Dabei hat es sich als zweckmäßig erwiesen, daß der Förderer aus zwei nebeneinander befindlichen geradlinig parallel, dann in einem Winkel von 90° kurvengängig sowie anschließend wieder geradlinig parallel verlaufenden Förderbändern mit je einem separat ansteuerbaren Antrieb gebildet ist.

Schließlich gehört es zur Erfindung, daß die Geschwindigkeiten der Förderbänder zueinander in Abhängigkeit von den sich bei unterschiedlichen Gebinden ergebenden Reibungsbeiwert ansteuerbar und veränderbar sind.

Insgesamt gesehen werden mit der vorgeschlagenen Vorrichtung die Nachteile des bekannten Standes der Technik vermieden. Die Gebinde können auf einfache Weise in ihrer Einlauflage verbleiben und werden dabei automatisch quergerichtet zu dieser auf den Ablaufförderer übergeben. Die Vorrichtung ist äußerst raumsparend und kann praktisch in allen Förderstraßen in beliebiger Weise eingesetzt werden. Die Gebinde selbst werden dabei äußerst schonend behandelt, ohne daß hohe Bodenbeanspruchungen zu befürchten sind.

Im nachfolgenden wird die Erfindung anhand von in den Zeichnungen dargestellten Ausführungsbeispielen näher erläutert:

Gemäß dem vereinfacht und in Draufsicht dargestellten Ausführungsbeispiel besteht die Vorrichtung aus einem Zulaufförderer 1, dem eine Einteilvorrichtung 2 vorgeordnet sein kann. Im Anschluß daran befindet sich der eigentliche Manipulationsbereich für die Gewinde 3 in Form eines Förderers 4, der aus zwei nebeneinander befindlichen und in einem Winkel von 90° kurvengängig verlaufenden Förderbändern 5, 6 gebildet ist. Anstelle der vorgesehenen Förderbänder können selbstverständlich auch andere Unterstützungsträger wie Seile, Ketten oder dgl. vorgesehen sein. Im Anschluß daran befindet sich ein Ablaufförderer 7, der als Rollbahnförderer oder dgl. ausgebildet sein kann. Die Förderbänder 5, 6 besitzen je einen beispielsweise frequenz- oder stufenlos geregelten Antriebsmotor 8, 9, der es gestattet, die einzelnen Geschwindigkeiten der Förderbänder 5, 7 je nach den gegebenen Verhältnissen und unter Berücksichtigung der jeweiligen Reibungsverhältnisse einzuregeln.

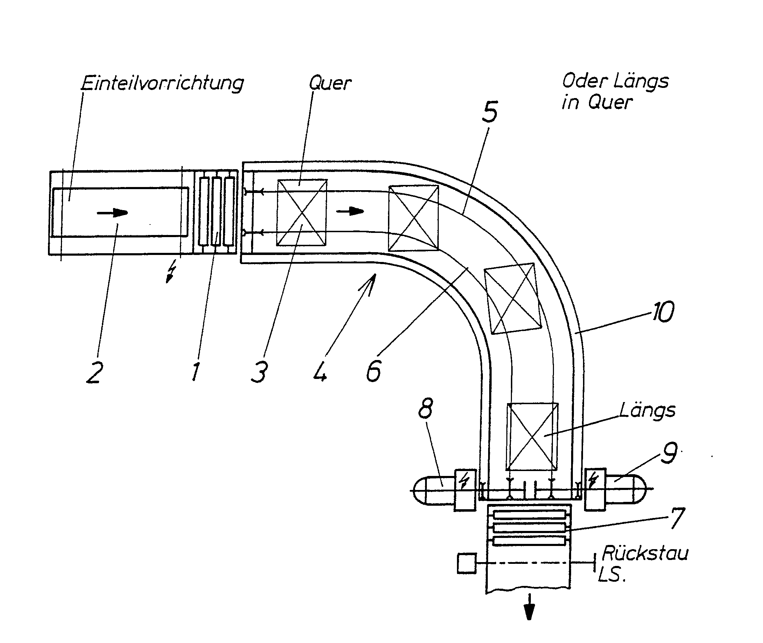

Wie aus der Zeichnung ersichtlich, werden die Gewinde 3 zunächst quer gerichtet nach einer entsprechenden Abstandseinteilung in der Einteilvorrichtung 2 dem Förderer 1 und dann dem Förderer 4 zugeführt und bei ständiger verbleibender Auflage auf diesen Förderer übernommen und unter Beibehaltung ihrer Einlauflage weitertransportiert. Durch die sich ergebende Relativgeschwindigkeit im Kurvenbereich erfolgt dann der Weitertransport der Gebinde ohne große Richtungsänderungen praktisch am Ende der 90° Strecke in Längsrichtung, wobei das Gebinde 3 bzw. die Gebindebodenfläche unter praktisch äußerst schonender Behandlung in der neuen Position weiter transportiert werden kann. Seitlich des Förderers können Geländer 10 oder dgl. vorgesehen sein, die selbst aber nicht zur Orientierung der Gebinde 3 beitragen, sondern lediglich als räumliche Begrenzungsebenen dienen. Die vorgeschlagene Vorrichtung kann praktisch bei jedem kontinuierlichen und/oder diskontinuierlichen Transportfluß Anwendung finden und beispielsweise auch für vorprogrammierbare Stückgutzusammenstellungen dienen, wie sie insbesondere bei einer Lagenpalettierung von Gebinden, Kästen und dgl. üblich ist. Die Vorrichtung kann mit verschiedenen Sicherheitseinrichtungen, beispielsweise Rückstaulichtschranken und dgl. vorgesehen sein, die bei einem Rückstau im Ablaufförderer 7 automatisch eine verzögerte Geschwindigkeit bzw. den Stillstand der Vorrichtung einleiten, bis der Rückstau durch die nachfolgende Behandlungsmaschine, beispielsweise Palettiermaschine oder dgl., abgebaut ist.

## Patentansprüche

1. Vorrichtung zum Drehen von Gebinden auf einer Förderstrecke, bei welcher die Gebinde mindestens an zwei Unterstützungspunkten von einem Förderer getragen und in ihrer Position um vorzugsweise 90° gedreht und weiter transportiert werden, bestehend aus mindestens zwei parallel zueinander verlaufenden Förderbändern mit zugeordneten Antrieben, dadurch gekennzeichnet, daß die Gebinde (3) bei verbleibender Auflage auf den Förderbändern (5, 6) unter Beibehaltung ihrer Einlauflage in einer um 90° verlaufenden Förderstrecke (4) aus einer quergerichteten Zulaufposition (1) in eine längsgerichtete Ablaufpositon und/oder umgekehrt verfahrbar sind.

2. Vorrichtung nach Anspruch 1, dadurch gekennzeichnet, daß der Förderer (4) aus zwei nebeneinander befindlichen geradlinig parallel, dann in einem Winkel von 90° kurvengängig sowie anschließend wieder geradlinig parallel verlaufenden Förderbändern (5, 6) mit je einem separat ansteuerbaren Antrieb (8, 9) gebildet ist.

3. Vorrichtung nach Anspruch 1, dadurch gekennzeichnet, daß die Geschwindigkeiten der Förderbänder 5, 6) zueinander in Abhängigkeit von dem sich bei unterschiedlichen Gebinden (3) ergebenden Reibungsbeiwert ansteuerbar und veränderbar sind.

Einteilvorrichtung

Quer

Oder Längs
in Quer

5

10

2

1

3

4

6

8

Längs

9

7

Rückstau
LS.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 509 984   (HARTUNG ET AL.)<br>* das ganze Dokument *<br>— — — | 1-3 | B 65 G 47/244 |
| A | AU-B-4 933 76   (BAKER PERKINS)<br>* Ansprüche 1-5; Figuren 1, 2 *<br>— — — | 1 | |
| A | US-A-3 690 443   (SNYDER)<br>* Spalte 1, Zeile 45 - Spalte 2, Zeile 12; Figuren 1, 2, 10 *<br>— — — — — | 1,3 | |
| | | | **RECHERCHIERTE SACHGEBIETE (Int. Cl.5)**<br><br>B 65 G |

Der vorliegende Recherchenbericht wurde für alle Patentansprüche erstellt

| Recherchenort | Abschlußdatum der Recherche | Prüfer |
|---|---|---|
| Berlin | 25 Juni 91 | SIMON J J P |